# EUROPÄISCHE PATENTSCHRIFT

(11) **EP 1 480 309 B1**
(45) Veröffentlichungstag und Bekanntmachung des Hinweises auf die Patenterteilung: **10.02.2010**
(21) Anmeldenummer: 04010420.0
(22) Anmeldetag: 03.05.2004
(51) Int. Cl.: H02G 3/08

(54) **Stopfen zum Verschliessen einer in einem Gehäuse vorgesehenen Öffnung zur Durchführung von Kabeln**
Stopper for closing in a housing a hole foreseen for the passage of cables
Bouchon de fermeture d'une ouverture prévue pour le passage de câbles

(30) Priorität: 22.05.2003 DE 10323080
(43) Veröffentlichungstag der Anmeldung: 24.11.2004
(73) Patentinhaber: ABB AG, 68309 Mannheim (DE)
(72) Erfinder: Krambs, Markus, 69190 Walldorf (DE)
(74) Vertreter: Miller, Toivo

(56) Entgegenhaltungen:
- EP-A- 0 976 618
- EP-A- 1 231 693

## Beschreibung

Die Erfindung betrifft einen Stopfen gemäß dem Oberbegriff des Anspruches 1.

Verteilergehäuse, in denen elektrische Schalt- und Steuergeräte untergebracht sind, beispielsweise in einer Hausinstallationsanlage, besitzen an wenigstens einer Seitenwand Öffnungen, durch die Kabel ins Innere eingeführt werden können. Die Anzahl der Öffnungen ist durch die Konstruktion vorbestimmt. Es gibt Fälle, in denen ein oder mehrere Öffnungen nicht benutzt werden; diese Öffnungen sind dann zu verschließen, damit Staub und gegebenenfalls Feuchtigkeit nicht ins Innere des Gehäuses eindringen können.

In anderen Anwendungen ist es notwendig, dass die Kabeldurchführungen und dann auch die verschlossene, nicht benutzten Öffnungen spritzwasserdicht nach IP 54 verschlossen sein müssen.

Bei einigen Installationsverteilergehäusen sind ausbrechbare Wandbereiche vorgesehen, die je nach Bedarf ausgebrochen werden können.

In der EP 1 231 693 ist ein Stopfen zum Abdichten einer in einem Gehäuse vorgesehenen Öffnung zur Durchführung von Kabeln offenbart, wobei der Stopfen von einer freien Seitenkante einer Wandung des Gehäuses aus in die Öffnung einsteckbar ist, wobei der Stopfen eine Durchbrechung aufweist, die auf einer Flachseite mittels einer Vorstülpung, wenigstens teilweise überdeckt ist und im im Gehäuse montierten Zustand des Stopfens die Vorstülpung nach außen vorspringt.

Aufgabe der Erfindung ist es, einen Stopfen der eingangs genannten Art zu schaffen, der in eine Öffnung des Gehäuses einsteckbar ist, durch den einerseits Kabel hindurch geführt werden können und der andererseits auch als sogenannter Blindstopfen dienen kann.

Diese Aufgabe wird erfindungsgemäß durch die Merkmale des Anspruches 1 gelöst.

Erfindungsgemäß ist der Stopfen auf der anderen Flachseite von einem Kragen mit einem radialen Durchbruch teilweise umgeben.

Mit diesem erfindungsgemäß ausgebildeten Stopfen kann eine in der Wandung eines Gehäuses vorhandene Öffnung, die zur freien Seitenkante der Wandung offen ist, eingesteckt werden; aufgrund der Ausgestaltung der Seitenkanten des Stopfens mit vorspringenden Leisten ist der Stopfen spritzwassergeschützt eingesetzt.

Bei einer Ausführungsform ist die Vorstülpung kegelförmig ausgebildet und besitzt wenigstens eine umlaufende Rille, an der die Kegelspitze abschneidbar ist, wobei die dadurch entstehende Einführöffnung für das Kabel dem Durchmesser des Kabels angepasst sein soll,

Durch diesen Stopfen kann ein Kabel eingeführt werden, in dem die Kegelspitze entsprechend dem Kabeldurchmesser abgeschnitten wird; in diesem Fall ist das Kabel ebenfalls spritzwasserdicht nach IP 54 durchgeführt.

Bei einer weiteren Ausführungsform ist die Vorstülpung mit einer Kabelöffnung versehen, wobei die Vorstülpung kegelstumpfförmig oder kugelschalenförmig ausgebildet sein kann.

Mit dem Kragen kann zusammen mit einem Kabelbinder auch eine Zugentlastung für das Kabel erzielt werden.

Zu diesem Zwecke besitzt der Kragen an seiner -bezogen auf die Durchbrechung- radial außenliegenden Umfangsfläche eine Rille, in die das langgestreckte Biegeteil am Kabelbinder einlegbar ist; aufgrund der vertieften Ausgestaltung der Rille kann, wenn der Kabelbinder um den Kragen und um das Kabel herum festgezogen ist, ein Verschieben des Kabels innerhalb des Stopfens nicht mehr stattfinden.

Weiter vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen sowie weitere Vorteile der Erfindung sowie weitere Vorteile näher erläutert und beschrieben werden.

Es zeigen:
- Fig. 1: eine perspektivische Aufsicht auf einen Stopfen gemäß der Erfindung, mit angesetztem Kabelbinder,
- Fig. 2: eine perspektivisch vergrößerte Darstellung des Stopfens gemäß Fig. 1, ohne Kabelbinder,
- Fig. 3: den Stopfen gemäß den Figuren 1 und 2 in anderer perspektivischer Darstellung,
- Fig. 4: einen Stopfen gemäß der Erfindung in einer weiteren Ausführungsform,
- Fig. 5: eine Ansicht eines in einem Gehäuse eingesetzten Stopfens, teilweise geschnitten und
- Fig. 6: eine perspektivische Ansicht einer weiteren Ausführungsform des Stopfens.

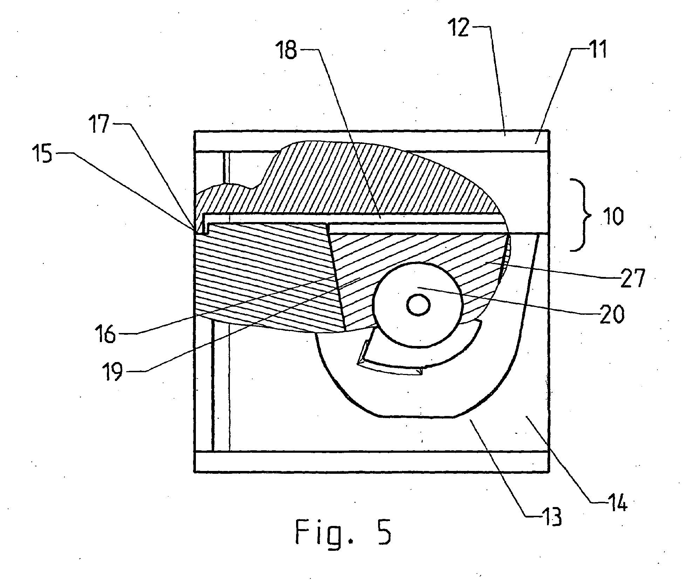

Es sei nun Bezug genommen auf die Fig. 5.

Die Erfindung wird angewendet bei einem Installationsverteilergehäuse 10, von dem lediglich eine Seitenwandung 11 des Gehäuseoberteils 12 und eine Seitenwandung 13 des Gehäuseunterteils 14 teilweise dargestellt sind, wobei der Blick auf die Innenflächen der Seitenwandungen 11 und 13 gerichtet ist.

Das Gehäuseunterteil 14 besitzt eine zu seiner freien Stirnkante 15 geöffnete halbkreisoder hufeisenförmige Ausnehmung 16 und die freie Stirnkante 17 des Gehäuseoberteils 12 besitzt eine rillenförmige Vertiefung 18.

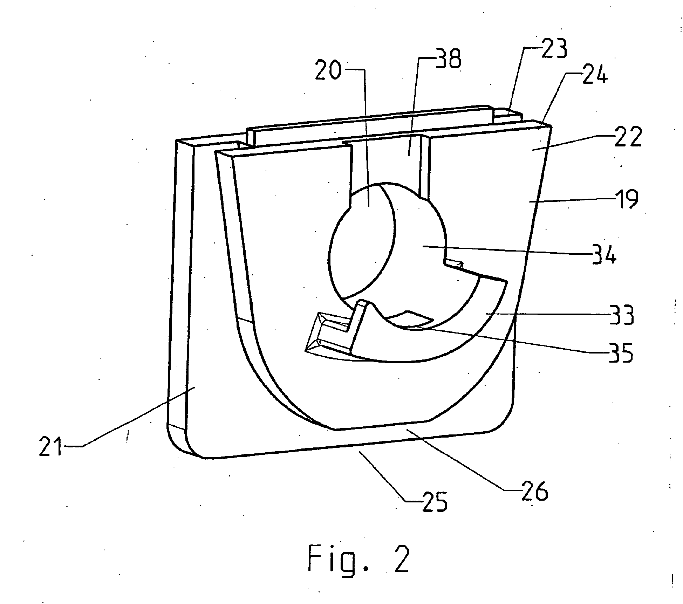

In die Öffnung 16 ist ein Stopfen 19 eingesetzt, der mittig eine Durchbrechung 20 aufweist und in den Figuren 2 bis 4 und 6 näher beschrieben ist.

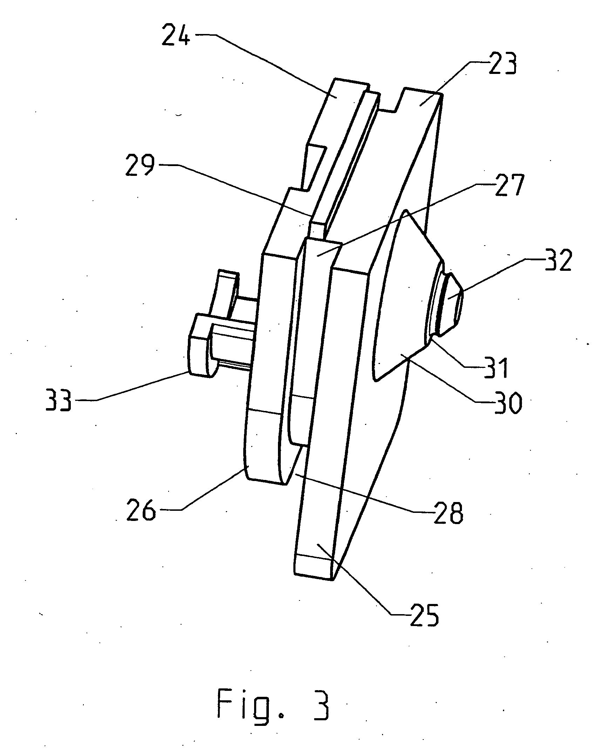

Es sei nun Bezug genommen auf die Figuren 2 und 3.

Der Stopfen 19 besitzt eine erste, etwa rechteckige Platte 21 und eine leicht dreieckig ausgebildete zweite Platte 22, deren erste Stirnkanten 23 und 24 miteinander fluchten, wogegen die entgegengesetzte Stirnkante 26 der zweiten Platte 22 einen geringeren Abstand von den Kanten 23, 24 aufweist als die Stirnkante 25 der ersten Platte 21. Wie aus Fig. 3 hervorgeht, sind beide Platten mittels eines Zwischenstücks 27 miteinander verbunden, dessen Kontur zwischen den beiden Platten 21 und 22 innerhalb der Konturen der beiden Platten verläuft, so dass dadurch eine Führungsrille 28 gebildet ist, die ausgehend von den Stirnkanten 23 und 24 zwischen den beiden Platten 21 und 22 umläuft. Das Zwischenstück 27 endet in der Ebene der Stirnkanten 23, 24.

Die Kontur des Zwischenstückes 27 zwischen den Platten 21, 22 entspricht der Innenkontur der Öffnung 16, so dass der Stopfen 19 so in die Öffnung 16 eingesteckt werden kann, dass sich die Kontur des Zwischenstückes 27 an die Innenkontur der Öffnung 16 anlegt und die beiden Platten 21 und 22 beidseitig der Wand des Gehäuseunterteils 14 liegen.

Die beiden Stirnkanten 23 und 24 bilden eine einheitliche Fläche mit der Stirnfläche des Zwischenstückes 27, wobei parallel zu den Platten 21 und 22 eine vorspringende Leiste 29 angeformt ist, die im montierten Zustand in die Vertiefung 18 im Gehäuseoberteil 12 eingreift.

Auf der freien Außenfläche der Platte 21 ist eine kegelstumpfförmige Vorstülpung 30 angeformt, die eine Rille 31 besitzt, so dass die Spitze 32 abgeschnitten werden kann, um eine Durchgangsöffnung in der Vorstülpung 30 zu erzeugen, durch die ein Kabel hindurch gesteckt werden kann.

Auf der freien Außenfläche der Platte 22 ist ein kreisbogenförmiger Kragen 33 angeformt, siehe auch Fig. 2, dessen Innenfläche mit der Innenfläche 34 der Öffnung 20 fluchtet der zur Kante 26 hin gelegen ist und die Durchbrechung 20 dort begrenzt. Der Kragen 33 besitzt einen bezogen auf die Durchbrechung 20 radial verlaufenden Durchbruch 35; an der Stirnseite des Kragens 33 ist eine bezogen auf die Durchbrechung 20 radial nach außen verlaufende Leiste 36 vorgesehen, so dass zwischen der Leiste 36 und der Platte 22 eine Halterille 37 gebildet ist. Diametral dem Kragen gegenüber liegend besitzt die Platte 22 eine Vertiefung 38, die bezogen auf die Durchbrechung 20 radial verläuft.

Die Montage der Kabeldurchführung geschieht wie folgt:

Der Stopfen 19 wird in die Öffnung 16 eingesetzt, wobei die Spitze 32 abgeschnitten ist. Sodann wird das Kabel durch die Durchbrechung 20 und die durch die abgeschnittene Spitze 32 gebildete Öffnung an der Vorstülpung 30 hindurch gefädelt. Die Vorstülpung 30 umfasst dabei das Kabel spritzwassergeschützt gemäß IP 54. Zwecks Zugentlastung wird ein Kabelbinder 40 benutzt, der einen Kopf 41 und einen biegbaren Schwanz 42 (Biegeteil) aufweist. Der biegbare Schwanz 42 wird durch den radialen Durchbruch 35 hindurch gesteckt und dann der Kopf 41 auf der Vertiefung bzw. in der Vertiefung 38 manuell festgehalten. Nach Umbiegen des Schwanzes 42 in die Rille 37 und Durchstecken des Endes des Schwanzes 42 durch die im Kopf 41 gebildete und vorgesehene Kopföffnung 43 und nach Festziehen (in üblicher Weise) wird auf das Kabel eine radiale Kraft ausgeübt und aufgrund der Rille 37 und der Vertiefung 38 ist der Kabelbinder 40 und damit das Kabel (nicht dargestellt) am Stopfen 19 festgelegt.

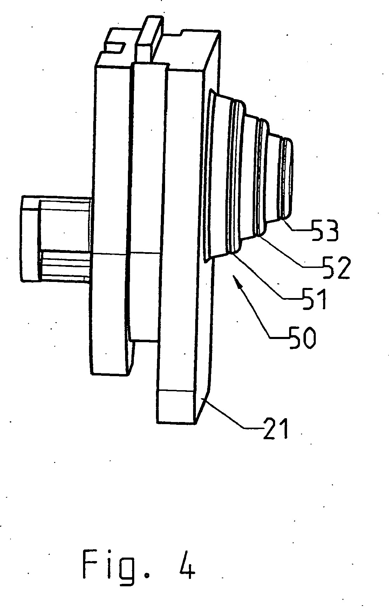

Die Fig. 4 zeigt eine Ausgestaltung, bei der eine sich stufige verjüngende Vorstülpung 50 an der Außenfläche der Platte 21 angeformt ist, die drei Rillen 51 bis 53 aufweist, an denen die Spitze der Vorstülpung 50 abgeschnitten werden kann.

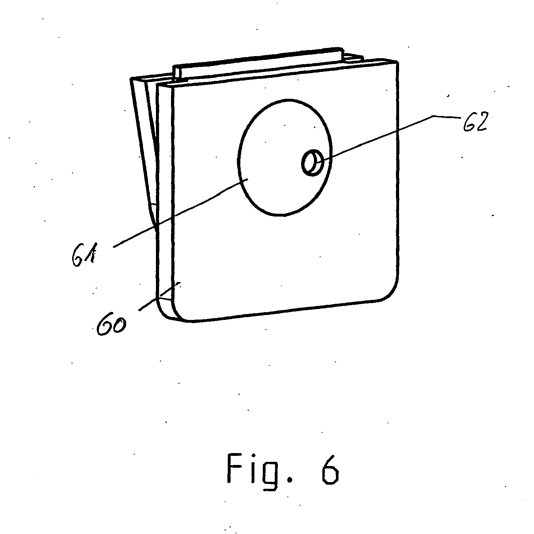

Die Fig. 6 zeigt einen Stopfen 60 von außen, der anstatt einer kegelstumpfförmigen Vorstülpung eine kugelabschnittsförmige Vorstülpung 61 besitzt, in deren vorderstem Teil eine kreisförmige Öffnung 62 eingeformt ist.

Oben ist dargestellt worden, dass die Öffnung 16 hufeisenförmig ausgebildet sein kann; es besteht natürlich auch die Möglichkeit, die Öffnung 16 und das entsprechende Zwischenstück V-förmig spitz zulaufend oder U-förmig auszubilden, wobei der Grund des U parallel zur Kante der Seitenwandung 14 verläuft und die Schenkel der U-Form sich V-förmig zur freien Kante der Seitenwandung 14 öffnen.

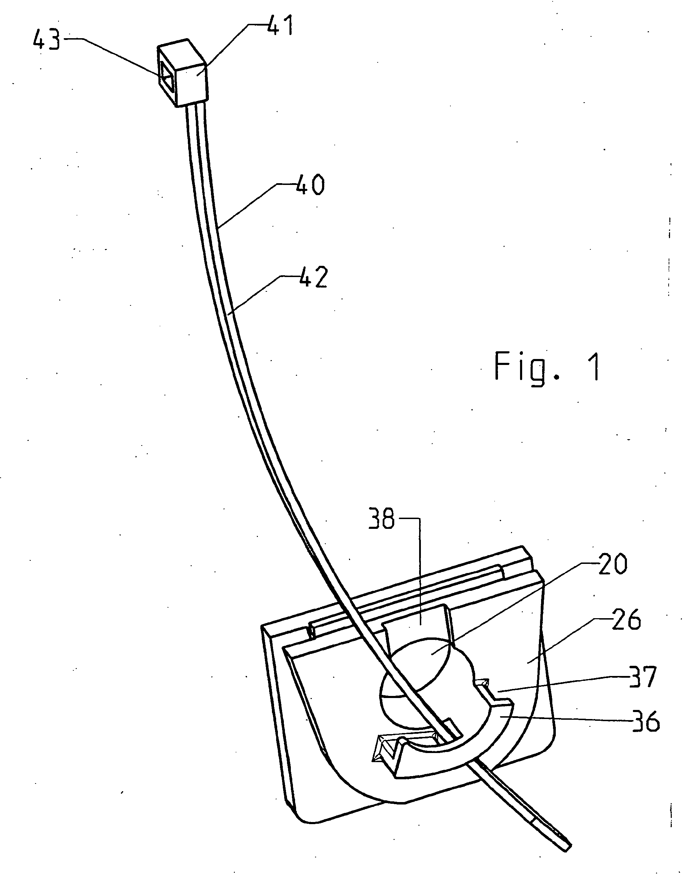

Die Stopfen gemäß den Figuren 1 bis 4 und Fig. 6 unterscheiden sich nur darin, dass unterschiedliche Vorstülpungen 30, 50 vorgesehen sind; alle anderen Teile sind gleich, so dass in den Figuren 4 und 6 hierauf nicht näher eingegangen werden soll.

## Patentansprüche

1. Stopfen zum Abdichten einer in einem Gehäuse vorgesehenen Öffnung (16) zur Durchführung von Kabeln, wobei der Stopfen (19) von einer freien Seitenkante einer Wandung (14) des Gehäuses (10) aus in die Öffnung einsteckbar ist, wobei der Stopfen (19) eine Durchbrechung (20) aufweiset, die auf einer Flachseite mittels einer Vorstülpung (30, 50), wenigstens teilweise überdeckt ist und im im Gehäuse montierten Zustand des Stopfens die Vorstülpung (30, 50) nach außen vorspringt, **dadurch gekennzeichnet, dass** der Stopfen (19) auf einer anderen Flachseite von einem Kragen (33) mit einem radialen Durchbruch (35) teilweise umgeben ist.

2. Stopfen nach Anspruch 1, **dadurch gekennzeichnet, dass** die Vorstülpung (30, 50) kegelstumpfförmig und geschlossen ist, wobei sie wenigstens eine umlaufende Rille (31; 51 bis 53) aufweist, an der die Kegelspitze abschneidbar ist.

3. Stopfen nach Anspruch 1, **dadurch gekennzeichnet, dass** die Vorstülpung an ihrem vordersten Ende eine Kabeleinführungsöffnung aufweist.

4. Stopfen nach einem der Ansprüche 1 bis 3, **dadurch gekennzeichnet, dass** der Stopfen zwei durch ein Zwischenstück (27) miteinander verbundenen Platten (21, 22) aufweist, die zwischen sich eine umlaufende Führungsrille (28) bilden, so dass der Stopfen in die Öffnung (16) einsetzbar ist und die Gehäusewandung (14) in die Führungsrille (28) eingreift.

5. Stopfen nach einem der vorherigen Ansprüche, **dadurch gekennzeichnet, dass** der Kragen (33) an seiner bezogen auf die Durchbrechung (20) radial außen liegenden Umfangsfläche eine Halterille (37) aufweist.

6. Stopfen nach Anspruch 5, **dadurch gekennzeichnet, dass** zur Zugentlastung eines durch die Öffnung (16) und durch die Durchbrechungen (20) hindurch geführten Kabels ein Kabelbinder (40) vorgesehen ist, der mit seinem biegbaren Schwanz (42) radial von innen durch den Durchbruch (35) hindurchsteckbar ist, wobei nach umbiegen des biegbaren Schwanzes (42) in die Halterille (37) und Durchstecken durch eine im Kabelbinderkopf (41) vorgesehene Kopföffnung (43) und Festziehen um das Kabel über die Halterille (37) und eine diametral zum Kragen angeordnete Vertiefung an der Außenfläche der Platte 26 das Kabel zugentlastet am Stopfen (19) gehalten ist.

7. Stopfen nach einem der vorherigen Ansprüche, **dadurch gekennzeichnet, dass** der Stopfen (19) erste Stirnkanten (23, 24) aufweist, die in einer Ebene mit der entsprechenden Stirnkante des Zwischenstücks (27) fluchten, und dass auf dieser dadurch gebildeten Ebene des Stopfens (19) eine parallel zu den Stirnkanten (23, 24) verlaufende Leiste (29) vorgesehen ist, die im montierten Zustand in eine entsprechende Vertiefung (18) am Gehäuseoberteil zur Abdichtung eingreift.

## Claims

1. A stopper for sealing an opening (16) provided in a housing for leading through cables, with the stopper (19) being insertable from a free side edge of a wall (14) of the housing (10) into the opening, with the stopper (19) having a breakthrough (20) which is covered at least partly on a flat side by means of a protrusion (30, 50) and the protrusion (30, 50) protruding to the outside in the state of the stopper when mounted in the housing, **characterized in that** the stopper (19) is enclosed partly on another flat side by a collar (33) with a radial breakthrough (35).

2. A stopper according to claim 1, **characterized in that** the protrusion (30, 50) has the shape of a truncated cone and is closed off, with the same having at least one circular groove (31; 51 to 53) on which the tip of the cone can be cut off.

3. A stopper according to claim 1, **characterized in that** the protrusion has a cable insertion opening at its front end.

4. A stopper according to one of the claims 1 to 3, **characterized in that** the stopper comprises two plates (21, 22) which are connected with each other by an intermediate element (27) and which form a circular groove (28) between themselves, so that the stopper can be inserted in the opening (16) and the wall (14) of the housing engages in the guide groove (28).

5. A stopper according to one of the preceding claims, **characterized in that** the collar (33) comprises a holding groove (37) on its circumferential surface which is disposed radially to the outside relating to the breakthrough (20).

6. A stopper according to claim 5, **characterized in that** a cable tie (40) is provided for strain relief of a cable which is guided through the opening (16) and through the breakthrough (20), which cable tie can be inserted with its bendable tail (42) radially from the inside through the breakthrough (35), with the cable being held in a strain-relieved manner on the stopper (19) after bending the bendable tail (42) into the holding groove (37) and insertion through a head opening (43) provided in the cable tie head (41) and tightly pulling around the cable via the holding groove (37) and a recess on the outside surface of the plate (26) which is arranged diametrically in relation to the collar.

7. A stopper according to one of the preceding claims, **characterized in that** the stopper (19) comprises first front edges (23, 24) which are in alignment in a plane with the respective front edge of the intermediate element (27) and a strip (29) is provided on this plane of the stopper (19) thus formed, which strip extends parallel to the front edges (23, 24) and which in the mounted state engages in a respective recess (18) on the upper part of the housing for sealing.

## Revendications

1. Bouchon pour fermer une ouverture (16) prévue dans un boîtier pour le passage de câbles, lequel bouchon (19) peut être introduit dans l'ouverture à partir d'un bord latéral libre d'une paroi (14) du boîtier (10), lequel bouchon (19) possède une traversée (20) qui est recouverte au moins partiellement sur un côté plat au moyen d'une saillie évasée (30, 50) et la saillie évasée (30, 50) dépasse vers l'extérieur quand le bouchon est monté dans le boîtier, **caractérisé en ce que** le bouchon (19) est partiellement entouré par un collet (33) avec une traversée radiale (35) sur l'autre côté plat.

2. Bouchon selon la revendication 1, **caractérisé en ce que** la saillie évasée (30, 50) est tronconique et fermée et présente au moins une rainure circonférentielle (31 ; 51 à 53) au niveau de laquelle la pointe du cône peut être coupée.

3. Bouchon selon la revendication 1, **caractérisé en ce que** la saillie évasée présente une ouverture d'introduction de câbles à son extrémité antérieure.

4. Bouchon selon l'une des revendications 1 à 3, **caractérisé en ce que** le bouchon présente deux plaques (21, 22) reliées entre elles par une pièce intercalaire (27), qui forment entre elles une rainure de guidage circonférentielle (28), de telle sorte que le bouchon peut être introduit dans l'ouverture (16) et la paroi du boîtier (14) se met en prise dans la rainure de guidage (28).

5. Bouchon selon l'une des revendications principales, **caractérisé en ce que** le collet (33) présente une rainure de maintien (37) sur sa surface d'enveloppe extérieure dans le sens radial par rapport à la traversée (20).

6. Bouchon selon la revendication 5, **caractérisé en ce qu'**en vue de décharger la traction sur un câble passé à travers l'ouverture (16) et la traversée (20), il est prévu un serre-câble (40) qui peut être enfilé par sa queue flexible (42) à travers la traversée (35) depuis l'intérieur dans le sens radial, de sorte qu'après avoir replié la queue flexible (42) dans la rainure de maintien (37) et l'avoir passée à travers une ouverture de tête (43) prévue dans la tête du serre-câbles (41) et serrée autour du câble sur la rainure de maintien (37) et un creux diamétralement opposé au collet sur la surface extérieure de la plaque (26), le câble est retenu avec une décharge de traction sur le bouchon (19).

7. Bouchon selon l'une des revendications précédentes, **caractérisé en ce que** le bouchon (19) présente des premiers bords frontaux (23, 24) alignés dans le même plan que le bord frontal correspondant de la pièce intercalaire (27), et **en ce qu'**il est prévu dans le plain ainsi formé du bouchon (19) une bande (29) parallèle aux bords frontaux (23, 24) qui se met en prise, dans l'état monté, dans un creux (18) correspondant sur la partie supérieure du boîtier en assurant l'étanchéité.
